# EUROPÄISCHE PATENTSCHRIFT

(11) **EP 3 019 843 B1**
(45) Veröffentlichungstag und Bekanntmachung des Hinweises auf die Patenterteilung: **16.08.2017**
(21) Anmeldenummer: 14739693.1
(22) Anmeldetag: 10.06.2014
(51) Int. Cl.: G01L 1/12, G01L 1/04

(54) **MECHANISCHES BAUTEIL UND VERFAHREN ZUM BESTIMMEN EINER AUF EIN MECHANISCHES BAUTEIL EINWIRKENDEN BEANSPRUCHUNGSKRAFT**
MECHANICAL COMPONENT AND METHOD FOR DETERMINING A STRESS LOAD ACTING ON A MECHANICAL COMPONENT
PIÈCE MÉCANIQUE ET PROCÉDÉ DE DÉTERMINATION D'UNE FORCE DE SOLLICITATION AGISSANT SUR UNE PIÈCE MÉCANIQUE

(30) Priorität: 12.07.2013 DE 102013213672
(43) Veröffentlichungstag der Anmeldung: 18.05.2016
(73) Patentinhaber: ZF Friedrichshafen AG, 88046 Friedrichshafen (DE); Lemförder Electronic GmbH, 32339 Espelkamp (DE)
(72) Erfinder: NACHBAR, Frank, 49088 Osnabrück (DE); VORTMEYER, Jens, 32361 Preussisch Oldendorf (DE); STRATMANN, Julian, 49324 Melle (DE); HOFMANN, Peter, 82131 Gauting (DE); SCHWIEBERT, Henner, 32139 Spenge (DE); SPIEKERMANN, Michael, 49835 Wietmarschen (DE); HAEVESCHER, Rainer, 32351 Stemwede (DE)
(86) Internationale Anmeldenummer: PCT/EP2014/061953
(87) Internationale Veröffentlichungsnummer: WO 2015/003861

(56) Entgegenhaltungen:
- DE-A1-102011 089 605
- US-B1- 6 578 434

## Beschreibung

Die vorliegende Erfindung bezieht sich auf ein mechanisches Bauteil für ein Fahrzeug und auf ein Verfahren zum Bestimmen einer auf ein mechanisches Bauteil für ein Fahrzeug einwirkenden Beanspruchungskraft.

Mechanische Bauteile sind Kräften ausgesetzt, die zu einem Verschleiß der Bauteile führen können. Die DE 10 2011 089 605 beschreibt ein Verfahren zur Erfassung einer auf ein mechanisches Bauteil einwirkenden Kraft unter Verwendung eines Magnetfeldsensors.

Vor diesem Hintergrund schafft die vorliegende Erfindung ein verbessertes mechanisches Bauteil für ein Fahrzeug und ein verbessertes Verfahren zum Bestimmen einer auf ein mechanisches Bauteil für ein Fahrzeug einwirkenden Beanspruchungskraft gemäß den Hauptansprüchen. Vorteilhafte Ausgestaltungen ergeben sich aus den Unteransprüchen und der nachfolgenden Beschreibung.

Unter einem mechanischen Bauteil ist ein Bauteil zu verstehen, welches z.B. in Form eines Koppelgliedes und/oder Kraftübertragungsgliedes Zug- und/oder Druckkräfte und/oder Torsionskräfte aufnehmen und/oder übertragen kann. Auf mögliche Anwendungen wird später noch eingegangen.

Eine Deformation eines mechanischen Bauteils kann unter Verwendung eines Magnetfeldsensors erfasst werden. Wird das mechanische Bauteil mit einem Verformungselement ausgestattet, dass die Deformation des mechanischen Bauteils in einer verstärkten Form abbildet, so kann die Deformation des mechanischen Bauteils unter Verwendung des Magnetfeldsensors an dem Verformungselement erfasst werden. Die Erfassung der Deformation an dem Verformungselement kann aufgrund der Verstärkerwirkung des Verformungselements mit einer hohen Messgenauigkeit durchgeführt werden. Vorteilhafterweise können unter Einsatz eines solchen Verformungselements auch sehr kleine Deformationen des mechanischen Bauteils sicher erfasst werden. Ohne das Verformungselement können solch kleine Deformationen unter Umständen nicht oder nur unsicher erfasst werden.

Ein mechanisches Bauteil für ein Fahrzeug ist dadurch gekennzeichnet, dass das mechanische Bauteil einen Messbereich und ein mit dem Messbereich mechanisch gekoppeltes Verformungselement aufweist, wobei der Messbereich bei einer im Betrieb des mechanischen Bauteils auf das mechanische Bauteil wirkenden Beanspruchungskraft eine Deformation erfährt und das Verformungselement ausgeformt ist, um ansprechend auf die Deformation des Messbereichs eine die Deformation des Messbereichs übersteigende und von einem Magnetfeldsensor erfassbare Verformung zu erfahren.

Das mechanische Bauteil kann beispielsweise zur Übertragung der Beanspruchungskraft in einem Fahrzeug, vorzugsweise in einem Fahrwerk vorgesehen sein. Im betriebsbereiten Zustand kann das mechanische Bauteil in dem Fahrzeug verbaut sein. Das Fahrzeug ist dabei nur beispielhaft gewählt. Es kann sich bei dem mechanischen Bauteil auch um ein Bauteil für eine andere Anwendung, beispielsweise für eine Windkraftanlage oder für eine Maschine handeln.

Der Messbereich kann einen Abschnitt oder ein Segment des Bauteils umfassen. Einander gegenüberliegende Randflächen des Messbereichs können Querschnittsflächen des Bauteils darstellen. Das Verformungselement kann beispielsweise als ein biegsamer Stab oder ein biegsamer Streifen ausgeführt sein. Das Verformungselement kann aus einem federelastischen Material sein. Das Verformungselement kann kraft-, stoff- oder formschlüssig mit dem Messbereich verbunden sein. Das Verformungselement kann auf oder an einer Oberfläche des Verformungselements angeordnet sein. Das Verformungselement kann sich über eine Oberfläche des Messbereichs erheben. Das Verformungselement kann außerhalb einer durch das Bauelement verlaufenden Kraft-Wirk-Linie der Beanspruchungskraft verlaufen. Unter der Deformation des Messbereichs kann eine Formänderung des Bauteils zumindest innerhalb des Messbereichs verstanden werden. Die Deformation kann sich durch eine Längenänderung oder Winkeländerung desjenigen Abschnitts des Messbereichs auszeichnen, der mit dem Verformungselement gekoppelt ist. Die Verformung kann sich durch eine Längenänderung oder Winkeländerung eines sich in einem Erfassungsbereich des Magnetfeldsensors befindlichen Abschnitts des Verformungselements auszeichnen. Die Längenänderung oder Winkeländerung des Verformungselements kann dabei ein Ausmaß einer Längenänderung oder Winkeländerung des Messbereichs überschreiten. Somit kann die Verformung des Verformungselement größer als die Deformation des Messbereichs sein. Das Verformungselement kann somit als ein mechanischer Verstärker aufgefasst sein, der die Deformation des Messbereichs in eine größere Verformung des Verformungselement abbildet. Eine bestimmte Verformung des Verformungselement kann einer bestimmten Deformation des Messbereichs oder einer bestimmten Beanspruchungskraft zugeordnet werden, beispielsweise unter Verwendung vorbestimmter Referenzdaten.

Um die Verformung des Verformungselements unter Verwendung eines Magnetfeldsensors erfassen zu können, kann das Verformungselement ein elektrisch leitfähiges, magnetisches oder magnetisierbares Material umfassen. Das Verformungselement kann aus einem Material sein, das sich von einem Material unterscheiden kann, aus dem der Messbereich aufgebaut ist. Somit kann für die Betätigungskraft übertragende Abschnitte des Bauteils ein anderes Material gewählt werden, als für das Verformungselement.

Gemäß einer Ausführungsform sind ein erster Kontaktierungsabschnitt und ein zweiter Kontaktierungsabschnitt des Verformungselements mit einer Oberfläche des Messbereichs verbunden. Ein sich zwischen den Kontaktierungsabschnitten erstreckender Verbindungsabschnitt des Verformungselements kann von der Oberfläche beabstandet angeordnet sein. Die Kontaktierungsabschnitte können die Enden des Verformungselements darstellen. Indem das Verformungselement an zwei Kontaktierungsabschnitten mit dem Messbereich verbunden ist, kann die Deformation des Messbereichs beispielsweise zu einer Stauchung oder einer Entspannung des Verformungselements führen.

Beispielsweise kann der Messbereich eine Nut umfassen und das Verformungselement kann in der Nut eingespannt sein. Gemäß einer Ausführungsform kann die Nut parallel zu einer Kraft-Wirk-Linie der Beanspruchungskraft ausgerichtet sein. Eine Nut eignet sich um die Enden des Verformungselements konstruktiv einfach einzuspannen.

Das Verformungselement kann an einer Position des Messbereichs angeordnet sein, der am weitesten von einer Kraft-Wirk-Linie der Beanspruchungskraft entfernt angeordnet ist. Dadurch entsteht eine Art Hebelwirkung, durch die die Verformung des Verformungselements bei Einwirken einer Kraft entlang der Kraft-Wirk-Linie verstärkt wird.

Das mechanische Bauteil kann einen ersten Randbereich und einen zweiten Randbereich aufweisen. Der Messbereich kann zwischen den Randbereichen angeordnet sein. Dabei kann der erste Randbereich eine erste mechanische Schnittstelle zum Verbinden des mechanischen Bauteils mit einem weiteren mechanischen Bauteil aufweisen. Der zweite Randbereich kann eine zweite mechanische Schnittstelle zum Verbinden des mechanischen Bauteils mit noch einem weiteren mechanischen Bauteil aufweisen. Alternativ kann das mechanische Bauteil auch nur einen an den Messbereich angrenzenden Randbereich aufweisen. Auf diese Weise kann der Messbereich nur einen kleinen Anteil des gesamten mechanischen Bauteils ausformen.

Dabei können der erste Randbereich, der zweite Randbereich und/oder der Messbereich ein Material umfassen, das nicht magnetisch oder magnetisierbar ist. Für diese Bereiche kann somit ein unmagnetisches oder nicht magnetisierbares Material gewählt werden. Somit kann für die Randbereiche und den Messbereich das für die Funktion des mechanischen Bauteils jeweils geeignetste Material ausgewählt werden. Als Materialien kommen z.B. ferromagnetische Stähle in Frage, die je nach Anwendung auch aus hochfesten Stählen bestehen können.

Das mechanische Bauteil kann mindestens ein Felderzeugungsmittel zum Erzeugen eines elektromagnetischen Wechselfeldes und mindestens ein Detektionsmittel zum Detektieren des elektromagnetischen Wechselfeldes umfassen. Das Felderzeugungsmittel und das Detektionsmittel können benachbart zu dem Verformungselement angeordnet sein. Das Detektionsmittel kann ausgebildet sein, um ein elektrisches Detektionssignal auszugeben, das eine die Verformung des Verformungselements abbildende Veränderung des elektromagnetischen Wechselfeldes repräsentiert. Das Felderzeugungsmittel und das Detektionsmittel können beispielsweise als elektrische Spulen ausgeführt sein. Auf diese Weise kann während des Betriebs des mechanischen Bauteils, also im verbauten Zustand des mechanischen Bauteils, eine Beanspruchung des mechanischen Bauteils erfasst werden.

Das Detektionssignal kann über eine Schnittstelle, beispielsweise zu einem Steuergerät oder einer Auswerteeinrichtung oder Speichereinrichtung ausgegeben werden. Die Schnittstelle kann drahtlos oder drahtgebunden ausgeführt sein.

Das mechanische Bauteil kann ein Gehäuse zur elektromagnetischen Abschirmung des Verformungselements aufweisen. Das Gehäuse kann auf eine Oberfläche des mechanischen Bauteils aufgesetzt sein und das Verformungselement umschließen. Zusätzlich kann das Gehäuse das Felderzeugungsmittel und das Detektionsmittel umschließen. Ein umlaufender Rand des Gehäuses kann dicht mit der Oberfläche des Messbereichs abschließen.

Das mechanische Bauteil kann ein Dämpferelement, vorzugsweise eine Kolbenstange eines Dämpferelementes, ein Lenker (Zweipunkt oder Mehrpunktlenker), eine Verbindungsstrebe, eine Pendelstütze, ein Stabilisator oder ein Lenkungselement, vorzugsweise eine Lenkstange oder Spurstange, eine Lenksäule oder ein Spurlenker jeweils eines Fahrwerks des Fahrzeugs sein. Auch kann das mechanische Bauteil als Welle ausgebildet sein. Somit kann das mechanische Bauteil vorteilhaft in einem Fahrzeug verbaut werden.

Gemäß einer Ausführungsform ist ein Fahrwerk für ein Fahrzeug dadurch gekennzeichnet, dass das Fahrwerk zumindest ein mechanisches Bauteil gemäß einem der vorangegangenen Ansprüche aufweist. Beispielsweise kann das mechanische Bauteil zum Stabilisieren des Fahrverhaltens des Fahrzeugs vorgesehen sein und koppelt an einer Achse des Fahrzeugs einen Dämpfer mit einem Stabilisator. Somit kann fortlaufend während des Betriebs des Fahrzeugs oder während einer durchzuführenden Wartung des Fahrzeugs auf das Fahrwerk wirkende Kräfte oder eine Verformung durch das mechanische Bauteil erfasst werden.

Ein Verfahren zum Bestimmen einer auf ein mechanisches Bauteil für ein Fahrzeug einwirkenden Beanspruchungskraft, wobei das mechanische Bauteil einen Messbereich und ein mit dem Messbereich mechanisch gekoppeltes Verformungselement aufweist, wobei der Messbereich bei einer im Betrieb des mechanischen Bauteils auf das mechanische Bauteil wirkenden Beanspruchungskraft eine Deformation erfährt und das Verformungselement ausgeformt ist, um ansprechend auf die Deformation des Messbereichs eine die Deformation des Messbereichs übersteigende und von einem Magnetfeldsensor erfassbare Verformung zu erfahren, ist dadurch gekennzeichnet, dass das Verfahren einen Schritt des Erzeugens eines elektromagnetischen Wechselfeldes, einen Schritt des Detektierens einer durch die Verformung bewirkte Veränderung des elektromagnetischen Wechselfelds und einen Schritt des Ausgebens eines elektrischen Detektionssignals, das die durch die Verformung des Verformungselements bewirkte Veränderung des elektromagnetischen Wechselfeldes repräsentiert, umfasst.

Die Erfindung wird anhand der beigefügten Zeichnungen beispielhaft näher erläutert. Es zeigen:
Fig. 1 ein mechanisches Bauteil gemäß einem Ausführungsbeispiel der vorliegenden Erfindung;
Fig. 2 ein mechanisches Bauteil gemäß einem Ausführungsbeispiel der vorliegenden Erfindung;
Fig. 3 ein mechanisches Bauteil gemäß einem Ausführungsbeispiel der vorliegenden Erfindung;
Fig. 4 eine schematische Darstellung eines Fahrwerks für ein Fahrzeug gemäß einem Ausführungsbeispiel der vorliegenden Erfindung; und
Fig. 5 ein Ablaufdiagramm eines Verfahren zum Bestimmen einer auf ein mechanisches Bauteil für ein Fahrzeug einwirkenden Beanspruchungskraft.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

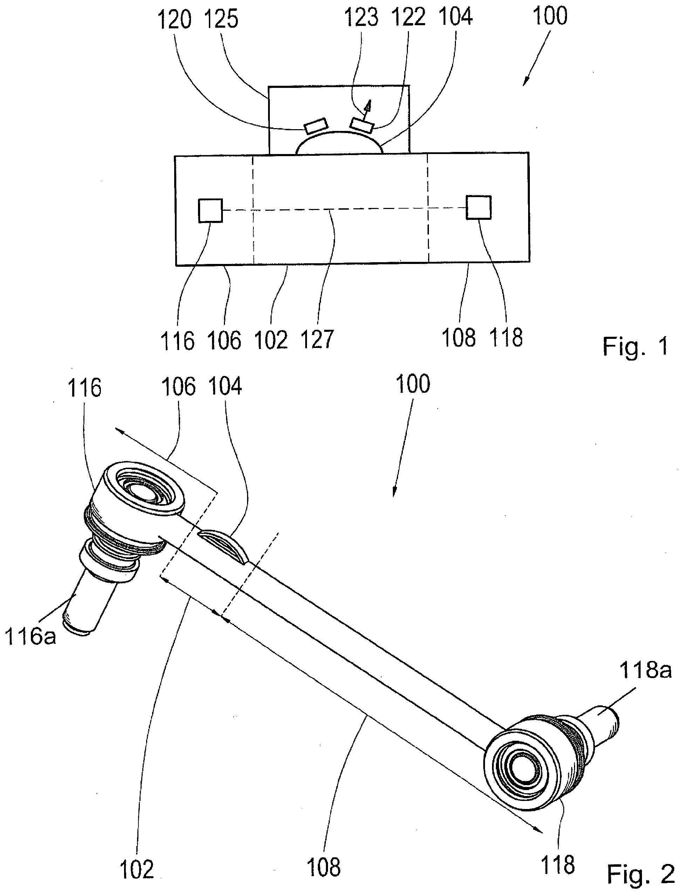

Fig. 1 zeigt ein mechanisches Bauteil 100 gemäß einem Ausführungsbeispiel der vorliegenden Erfindung. Das mechanische Bauteil 100 weist einen Messbereich 102 auf. An einer Oberfläche des Messbereichs 102 ist ein Verformungselement 104 angeordnet. Beispielhaft ist der Messbereich 102 zwischen einem ersten Randbereich 106 und einem zweiten Randbereich 108 des mechanischen Bauteils 100 angeordnet. Der erste Randbereich 106 weist eine erste Schnittstelle 116 und der zweite Randbereich 108 weist eine zweite Schnittstelle 118 auf. Über die erste Schnittstelle 116 und die zweite Schnittstelle 118 kann eine Kraft in das mechanische Bauteil 100 eingleitet oder ausgeleitet werden. Die Kraft führt zu einer Deformation des mechanischen Bauteils 100. Die Deformation des mechanischen Bauteils 100 führt wiederum zu einer Verformung des Verformungselements 104. Die Verformung des Verformungselements 104 kann durch eine geeignete Sensorik, beispielsweise unter Durchführung einer Magnetfeldmessung erfasst werden. Gemäß diesem Ausführungsbeispiel weist eine solche Sensorik ein Felderzeugungsmittel 120 und ein Detektionsmittel 122 auf. Das Felderzeugungsmittel 120 und das Detektionsmittel 122 sind benachbart zu dem Verformungselement angeordnet. Das Felderzeugungsmittel 120 ist ausgebildet, um ansprechend auf ein Steuersignal ein Magnetfeld zu erzeugen. Das Magnetfeld wird durch das Verformungselement 104 beeinflusst. Eine Beeinflussung des Magnetfelds ist abhängig von einer Form des Verformungselements 104. Das Detektionsmittel 122 ist ausgebildet, um das beeinflusste Magnetfeld zu erfassen und ein, das beeinflusste Magnetfeld und somit die Verformung des Verformungselements 104 repräsentierendes Detektionssignal 123 auszugeben. Das Verformungselement 104, das Felderzeugungsmittel 120 und das Detektionsmittel 122 sind in einem Gehäuse 125 angeordnet. Das Gehäuse 125 sitzt auf einer Oberfläche des Messbereichs 102 auf und ist ausgebildet, um das Verformungselement 104, das Felderzeugungsmittel 120 und das Detektionsmittel 122 vor elektromagnetischer Strahlung abzuschirmen. Gemäß diesem Ausführungsbeispiel ist das Gehäuse 125 als eine Halbschale mit einem, im montierten Zustand, um das Verformungselement 104 umlaufenden Rand ausgebildet. Das Gehäuse 125, das Detektionsmittel 122 oder eine in dem Gehäuse 125 angeordnete Auswerteeinrichtung kann eine Schnittstelle zum Ausgeben des Detektionssignals 123 aufweisen. Ferner kann das Gehäuse 125 eine Schnittstelle zum Empfangen des Steuersignals zum Ansteuern des Felderzeugungsmittels 120 oder zum Bereitstellen von elektrischer Energie zum Ansteuern des Felderzeugungsmittels 120 aufweisen.

Gemäß einem Ausführungsbeispiel zeigt Fig. 1 ein Messelement zur sensorischen Magnetfeldmessung. Dabei erfolgt eine Messung zur Umwandlung von Beanspruchungskräften eines kraftbeaufschlagten Bauteils 100 auch Messbauteil genannt, in elektrische Signale mit Hilfe eines Magnetfeldes. Dabei wird die Änderung eines Magnetfeldes durch Kraftbeanspruchung gemessen. Gleichzeitig wird eine elektromagnetische Verträglichkeit gegenüber extern auftretenden magnetischen Feldern, die als Störgrößen wirken, gewährleistet. Beispielsweise kann das Gehäuse 125 eine entsprechende EMV-Abschirmung bereitstellen.

Gemäß diesem Ausführungsbeispiel stellt das Innere des Gehäuses 105 eine abgeschirmte "Box" dar, in deren Inneren die gewünschte Messung zur Erfassung der auf das mechanische Bauelement 100 wirkenden Kraft, stattfinden kann, ohne dass dabei von außerhalb der "Box" Störgrößen auf die Messqualität Einfluss nehmen können. Es wird also bewusst ein Magnetfeld genutzt, ohne dass andere magnetische Einflüsse vorhanden sind. Dies macht eine Abschirmtechnik nötig, die gemäß diesem Ausführungsbeispiel durch eine komplette Einhausung durch das Gehäuse 125 und die dem Gehäuseinneren des Gehäuses 125 zugewandte Oberfläche des Messbereichs 102 zufrieden stellend gewährleistet wird. Vorteilhafterweise ist es somit nicht erforderlich, das gesamte mechanische Bauteil 100 einzuhausen. Somit können diejenigen Randbereiche 106, 108 des mechanischen Bauteils 100, die Schnittstellen 116, 118 besitzen und z. B. nur als kraftübertragendes Verbindungselement dienen, wie z. B. bei einem Fahrwerksbauteil die Verbindung zwischen Karosserie und Rad herstellen, außerhalb des Gehäuses 125 angeordnet sein. Es ist also nur eine partielle Einhausung erforderlich wobei dann Teile des mechanischen Bauelements 100 aus dieser herausragen. Die messbare Magnetfeldänderung am Bauteil 100 kann sehr klein sein wodurch sich ein nur schwaches Messsignal ergibt.

Gemäß einem Ausführungsbeispiel erfolgt eine Aufteilung des mechanischen Bauteils, hier beispielhaft als Fahrwerkbauteil 100 ausgeführt, in den Messbereich 102 und zumindest einen Randbereich 106, 108. Der Messbereich 102 zeichnet sich dadurch aus, dass er sich sowohl gegen äußere Störeinflüsse gut abschirmen lässt als sich auch hinsichtlich des Detektionssignals 123, auch Messsignal genannt, verstärkend auswirkt.

Der oben beschriebene Messbereich 102 besteht dabei aus einem Randbereich des Messbauteils 100 selbst und einem sich darauf befindenden zusätzlichem Verformungselement 104, auch als Messelement bezeichnet. Durch Verwendung eines zusätzlichen Verformungselements 104 kann die EMV-Abschirmung leichter realisiert werden, da gemäß einem Ausführungsbeispiel nur noch das Verformungselement 104 selbst aus einem magnetischen Werkstoff ist. Der Rest des Messbereichs 102 am mechanischen Bauteil 100 kann aus nichtmagnetischen Werkstoffen hergestellt werden. Es muss also nur noch das Verformungselement 104 selbst abgeschirmt werden, was einfach zu realisieren ist.

Gemäß einem Ausführungsbeispiel ist das Verformungselement 104 so mit dem eigentlichen Körper des mechanischen Bauelements 100 verbunden, dass die Beanspruchungskräfte des aus dem Messbereich 102 und dem zumindest einen Randbereich 106, 108 bestehenden Körper des mechanischen Bauelements 100 auf das Verformungselement 104 übertragen und durch die Anordnung und geometrische Gestaltung des Verformungselements 104 von diesem verstärkt werden können. Die Verformungen des Körpers des mechanischen Bauelements 100 werden innerhalb des Verformungselements 104 verstärkt, weil das Verformungselement 104 möglichst weit von der Kraft-Wirk-Linie der durch den Körper des mechanischen Bauteils 100 verlaufenden Kräfte liegt und sich somit eine Art Hebelarm bei der Verformung ergibt. Das Verformungselement 104 selbst ist ausgeformt, um diese Hebelverstärkung durch seine eigene geometrische Gestaltung gut in Verformung umzusetzen.

Gemäß einem Ausführungsbeispiel umfasst das Felderzeugungsmittel 120 einen Magnetflusskonzentrator und zumindest eine als Induktor wirkende Magnetfeld-Generator-Spule. Beispielsweise können Spulenwindungen, einer oder beispielsweise zweier separater Wicklungen des Felderzeugungsmittel 120 um den Magnetflusskonzentrator gewickelt sein. Der Magnetflusskonzentrator kann beispielsweise als ein gebogener Stab ausgeführt sein, durch den die Magnetfeldlinien zu dem Verformungselement 104 geführt werden. Einander gegenüberliegende Enden des Magnetflusskonzentrators können durch einen dünnen Spalt von einer Oberfläche des Verformungselements 104 getrennt sein. Das Detektionsmittel 122 kann als ein Magnet-Sensorelement aufgefasst werden, das wiederum als eine beliebige Art einer Magnetfeld-Sensoreinrichtung, beispielsweise als eine Spule, ein Hall-Effekt-Sensor, als ein Magnetwiderstandssensor oder als ein Riesenmagnetowiderstandssensor, ausgeführt sein kann. Wahlweise kann eine Signalrückkopplungsspule (Induktor), bzw. eine Sekundärspule vorgesehen sein. Es können auch beispielsweise zwei gleich aufgebaute Sensoren verwendet werden, um die Verformung des Verformungselements 104 zu erfassen.

Die geometrische Gestaltung des als Messelement fungierenden Verformungselements 104, hier als Federspange gezeigt, ist lediglich beispielhaft gewählt und kann durch eine andere Art von Verformungselement 104 ersetzt werden. Ebenso kann die Ausführung des mechanischen Bauteils 100 als ein zu messendes Bauteil, als ein Fahrwerksbauteil, hier eine Pendelstütze, oder als ein anderes Messbauteil ausgeführt sein.

Vorteilhafterweise ermöglicht der beschriebene Ansatz einen einfachen Aufbau und eine gute EMV-Abschirmbarkeit, da es ausreichend ist, das Verformungselement 104 aus magnetischem Material herzustellen. Des Weiteren sind eine gute Messgrößenverstärkung, ein variabler Einsatz und eine kostengünstige Realisierbarkeit erzielbar.

Fig. 2 zeigt ein mechanisches Bauteil 100 gemäß einem Ausführungsbeispiel der vorliegenden Erfindung. Gemäß diesem Ausführungsbeispiel ist das mechanische Bauteil 100 als ein Messbauteil, hier beispielhaft als ein Fahrwerksbauteil in Form einer Pendelstütze ausgeführt. Das mechanische Bauteil 100 weist eine Stange, beispielsweise mit rundem Querschnitt und an beiden Enden der Stange angeordnete Gelenkverbindungen, beispielsweise in Form von Kugelgelenken auf.

Das mechanische Bauteil 100 ist in drei Abschnitte, einen Messbereich 102, einen ersten Randbereich 106 und einen zweiten Randbereich 108 unterteilt. Der erste Randbereich 106 umfasst einen ersten Abschnitt der Stange und eine erste Gelenksverbindung, die eine erste Schnittstelle 116 ausbildet. Der zweite Randbereich 108 umfasst einen zweiten Abschnitt der Stange und eine zweite Gelenksverbindung, die eine zweite Schnittstelle 118 ausbildet. Der Messbereich 102 umfasst einen Zwischenabschnitt der Stange. Die Schnittstellen 116, 118 sind vorliegend durch ein Gelenkgehäuse eines Kugelgelenks gebildet, in die ein Kugelzapfen 116a, 118a schwenkbar aufgenommen ist. Über die Kugelzapfen kann eine Verbindung zu einem Anschlussbauteil hergestellt werden.

Innerhalb des Messbereichs 102 ist ein Verformungselement 104 angeordnet. Gemäß diesem Ausführungsbeispiel ist das Verformungselement 104 als ein Messelement, beispielsweise als eine Federspange oder Passfeder ausgeführt. Gegenüberliegende Enden des Verformungselements 104 sind in einer in einer Oberfläche des Messbereich 102 angeordneten Nut verspannt. Dadurch weist das Verformungselement 104 eine Vorspannung auf, durch die ein Mittelteil des Verformungslebens 104 über eine Oberfläche der Stange des mechanischen Bauteils 100 hervorragt. Das Verformungselement 104 wirkt als ein Verstärker, insbesondere als ein mechanischer Signalverstärker.

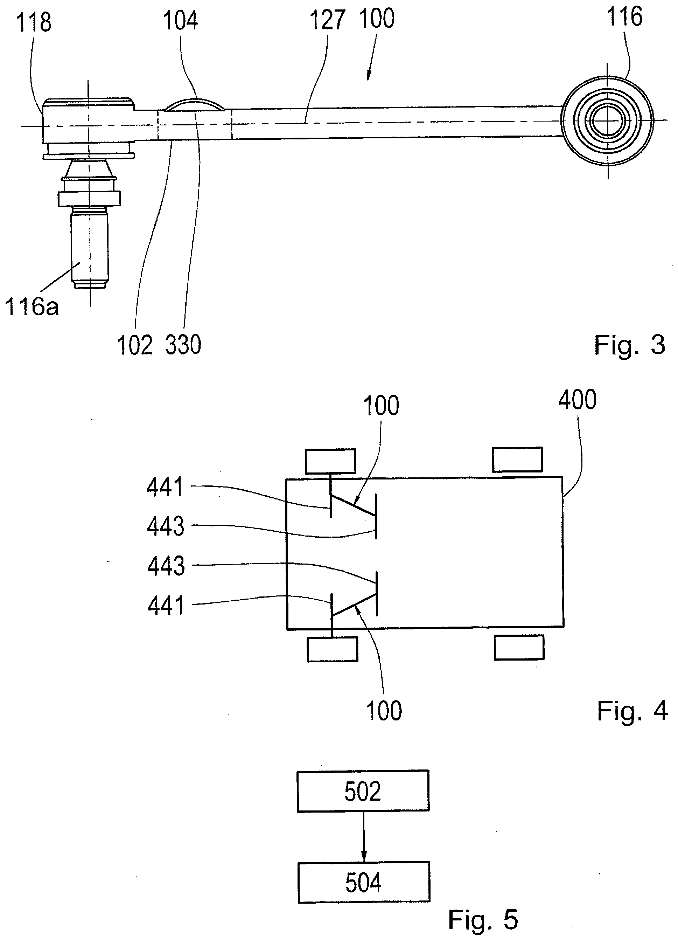

Fig. 3 zeigt eine weitere Darstellung des in Fig. 2 gezeigten mechanischen Bauteils 100 gemäß einem Ausführungsbeispiel der vorliegenden Erfindung. Gezeigt ist das Verformungselement 104, das sich in Form eines Bogens über eine in die Stange des mechanischen Bauteils 100 eingelassene Nut 330 erstreckt. Gezeigt ist in Fig. 3 auch eine Kraft-Wirk-Linie 127, die sich zwischen den Schnittstellen 116, 118 in etwa mittig durch die Stange des mechanischen Bauteils 100 hindurch erstreckt. Kontaktierungsabschnitte des Verformungselements 104, hier die in die Nut 330 eingreifenden Enden des als ein Streifen ausgeformten Verformungselements, sind in einem Abstand zu der Kraft-Wirk-Linie 127 mit dem Messbereich 102 verbunden.

Fig. 4 zeigt eine schematische Darstellung eines Fahrwerks 400 für ein Fahrzeug gemäß einem Ausführungsbeispiel der vorliegenden Erfindung. Gemäß diesem Ausführungsbeispiel umfasst das Fahrwerk 400 zumindest zwei mechanische Bauteile 100, wie sie anhand der vorangegangenen Figuren beschrieben sind. Die mechanischen Bauteile 100 sind gemäß diesem Ausführungsbeispiel als Pendelstützen im Fahrwerk 400 verbaut. Vorteilhafterweise kann auf diese Weise während des Betriebs des Fahrzeugs oder während einer Inspektion des Fahrzeugs eine auf die mechanischen Bauteile 100 wirkende Kraft gemessen werden.

Beispielhaft sind die mechanischen Bauteile 100, je zwischen zwei weiteren Bauteilen 441, 443, beispielsweise einem Achslenker und einem Stabilisator, verbaut und wirkt als Koppelglied zwischen Achslenker und Stabilisator.

Fig. 5 zeigt ein Ablaufdiagramm eines Verfahrens zum Bestimmen einer auf ein mechanisches Bauteil für ein Fahrzeug einwirkenden Beanspruchungskraft. Bei dem mechanischen Bauteil kann es sich um ein Bauteil handeln, wie es anhand der vorangegangenen Figuren beschrieben ist.

In einem Schritt 502 wird eine Veränderung eines elektromagnetischen Wechselfelds erfasst, die durch eine durch die Beanspruchungskraft hervorgerufene Deformation des mechanischen Bauteils, insbesondere des Messbereichs des mechanischen Bauteils, und somit eine von der Beanspruchungskraft sowie der Deformation abhängigen Verformung des Verformungselements, hervorgerufen wird. Ein Zusammenhang zwischen der Veränderung des elektromagnetischen Wechselfelds und der Beanspruchungskraft oder der Deformation des mechanischen Bauteils kann dabei vorbekannt sein, beispielsweise in einer Messreihe ermittelt worden sein.

In einem Schritt 504 wird ein elektrisches Detektionssignal ausgegeben. Das Detektionssignal repräsentiert, beispielsweise durch seine Signalform, die durch die Verformung des Verformungselements bewirkte Veränderung des elektromagnetischen Wechselfeldes und somit die Beanspruchungskraft oder Deformation des mechanischen Bauteils.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: mechanisches Bauteil
- 102: Messbereich
- 104: Verformungselement
- 106: erster Randbereich
- 108: zweiter Randbereich
- 116: erste Schnittstelle
- 118: zweite Schnittstelle
- 116a, 118a: Kugelzapfen
- 120: Felderzeugungsmittel
- 122: Detektionsmittel
- 125: Gehäuse
- 127: Kraft-Wirk-Linie
- 330: Nut
- 400: Fahrwerk
- 441: weiteres Bauteil
- 443: weiteres Bauteil
- 502: Schritt des Erfassens
- 504: Schritt des Ausgebens

## Patentansprüche

1. Mechanisches Bauteil (100) für ein Fahrzeug, wobei das mechanische Bauteil (100) einen Messbereich (102) und ein mit dem Messbereich (102) mechanisch gekoppeltes Verformungselement (104) aufweist, wobei ein erster Kontaktierungsabschnitt und ein zweiter Kontaktierungsabschnitt des Verformungselements (104) mit einer Oberfläche des Messbereichs (102) verbunden sind und ein sich zwischen den Kontaktierungsabschnitten erstreckender Verbindungsabschnitt des Verformungselements (104) von der Oberfläche beabstandet angeordnet ist, wobei der Messbereich (102) bei einer im Betrieb des mechanischen Bauteils (100) auf das mechanische Bauteil (100) wirkenden Beanspruchungskraft eine Deformation erfährt und das Verformungselement (104) ausgeformt ist, um ansprechend auf die Deformation des Messbereichs (102) eine die Deformation des Messbereichs (102) übersteigende und von einem Magnetfeldsensor (120, 122) erfassbare Verformung zu erfahren, **dadurch gekennzeichnet, dass** das Verformungselement ein elektrisch leitfähiges, magnetisches oder magnetisierbares Material umfasst und das mechanische Bauteil (100) mindestens ein Felderzeugungsmittel (120) zum Erzeugen eines elektromagnetischen Wechselfeldes, welches von der Form des Verformungselements (104) beeinflusst wird, und mindestens ein Detektionsmittel (122) zum Detektierten des elektromagnetischen Wechselfeldes umfasst, wobei das Felderzeugungsmittel (120) und das Detektionsmittel (122) beide zu dem Verformungselement (104) beabstandet sind und in keinem mechanischen Kontakt zum Verformungselement (104) stehen, wobei das Detektionsmittel (122) ausgebildet ist, um ein elektrisches Detektionssignal (123) auszugeben, das eine die Verformung des Verformungselements (104) abbildende Veränderung des elektromagnetischen Wechselfeldes repräsentiert, wobei der Messbereich (102) eine Nut (330) umfasst und das Verformungselement (104) in der Nut (330) eingespannt ist.

2. Mechanisches Bauteil (100) gemäß einem der vorangegangenen Ansprüche, **dadurch gekennzeichnet, dass** das Verformungselement (104) an einer Position des Messbereichs (102) angeordnet Ist, der am weitesten von einer Kraft-Wirk-Linie (127) der Beanspruchungskraft entfernt angeordnet ist.

3. Mechanisches Bauteil (100) gemäß einem der vorangegangenen Ansprüche, **dadurch gekennzeichnet, dass** das mechanische Bauteil (100) einen ersten Randbereich (106) und einen zweiten Randbereich (108) aufweist, wobei der Messbereich (102) zwischen den Randbereichen (106, 108) angeordnet ist, wobei der erste Randbereich (106) eine erste mechanische Schnittstelle (116) zum Verbinden des mechanischen Bauteils (100) mit einem weiteren mechanischen Bauteil (441) aufweist und der zweite Randbereich (108) eine zweite mechanische Schnittstelle (118) zum Verbinden des mechanischen Bauteils (100) mit noch einem weiteren mechanischen Bauteil (443) aufweist.

4. Mechanisches Bauteil (100) gemäß Anspruch 3, **dadurch gekennzeichnet, dass** der erste Randbereich (106), der zweite Randbereich (108) und/oder der Messbereich (102) kein magnetisches oder magnetisierbares Material umfassen.

5. Mechanisches Bauteil (100) gemäß einem der vorangegangenen Ansprüche, **dadurch gekennzeichnet, dass** das mechanische Bauteil (100) ein Dämpferelement, eine Kolbenstange eines Dämpferelementes, ein Lenker, eine Verbindungsstrebe, eine Pendelstütze, ein Stabilisator oder ein Lenkungselement, eine Lenkstange, eine Lenksäule oder ein Spurlenker eines Fahrwerks (400) des Fahrzeugs ist.

6. Mechanisches Bauteil (100) gemäß einem der vorangegangenen Ansprüche, **dadurch gekennzeichnet, dass** das Verformungselement (104) bogenförmig ausgebildet ist.

7. Mechanisches Bauteil (100) gemäß einem der vorangegangenen Ansprüche, **dadurch gekennzeichnet, dass** das mechanische Bauteil (100) ein Gehäuse (125) zur elektromagnetischen Abschirmung das Verformungselements (104) aufweist, wobei das Gehäuse (125) auf eine Oberfläche des mechanischen Bauteils (100) aufgesetzt ist und das Verformungselement (104) umschließt.

8. Fahrwerk (400) für ein Fahrzeug, **dadurch gekennzeichnet, dass** das Fahrwerk (400) zumindest ein mechanisches Bauteil (100) gemäß einem der vorangegangenen Ansprüche aufweist, das zum Stabilisieren des Fahrverhaltens des Fahrzeugs mit einer Achse des Fahrzeugs gekoppelt ist.

9. Verfahren zum Bestimmen einer auf ein mechanisches Bauteil (100) gemäß einem der Ansprüche 1 bis 7 für ein Fahrzeug einwirkenden Beanspruchungskraft, umfassend einen Schritt des Erzeugens (502) eines elektromagnetischen Wechselfeldes, welches von der Form des Verformungselements (104) beeinflusst wird, einen Schritt des Detektierens einer durch die Verformung des Verformungselements (104) bewirkten Veränderung des elektromagnetischen Wechselfelds und einen Schritt des Ausgebens (504) eines elektrischen Detektionssignals (123), das die durch die Verformung des Verformungseiements (104) bewirkte Veränderung des elektromagnetischen Wechselfelds repräsentiert.

## Claims

1. Mechanical component (100) for a vehicle, wherein the mechanical component (100) has a measuring region (102) and a deformation element (104) which is mechanically coupled to the measuring region (102), wherein a first contact-forming section and a second contact-forming section of the deformation element (104) are connected to a surface of the measuring region (102) and a connecting section, extending between the contact-forming sections, of the deformation element (104) is arranged spaced apart from the surface, wherein when a stress load acts on the mechanical component (100) during operation of the mechanical component (100) the measuring region (102) experiences deformation and the deformation element (104) is deformed, in order to experience, in response to the deformation of the measuring region (102) deformation which exceeds the deformation of the measuring region (102) and can be sensed by a magnetic field sensor (120, 122), **characterized in that** the deformation element comprises an electrically conductive, magnetic or magnetizable material, and the mechanical component (100) comprises at least one field-generating means (120) for generating an alternating electromagnetic field which is influenced by the shape of the deformation element (104), and at least one detection means (122) for detecting the alternating electromagnetic field, wherein the field-generating means (120) and the detection means (122) are both spaced apart from the deformation element (104) and are not in mechanical contact with the deformation element (104), wherein the detection means (122) is designed to output an electrical detection signal (123) which represents a change in the alternating electromagnetic field which maps the deformation of the deformation element (104), wherein the measuring region (102) comprises a groove (330), and the deformation element (104) is clamped into the groove (330).

2. Mechanical component (100) according to the preceding claim, **characterized in that** the deformation element (104) is arranged at a position of the measuring region (102) which is arranged furthest away from a force-action line (127) of the stress load.

3. Mechanical component (100) according to one of the preceding claims, **characterized in that** the mechanical component (100) has a first edge region (106) and a second edge region (108), wherein the measuring region (102) is arranged between the edge regions (106, 108), wherein the first edge region (106) has a first mechanical interface (116) for connecting the mechanical component (100) to a further mechanical component (441), and the second edge region (108) has a second mechanical interface (118) for connecting the mechanical component (100) to yet another mechanical component (443).

4. Mechanical component (100) according to Claim 3, **characterized in that** the first edge region (106), the second edge region (108) and/or the measuring region (102) do not comprise any magnetic or magnetizable material.

5. Mechanical component (100) according to one of the preceding claims, **characterized in that** the mechanical component (100) is a damper element, a piston rod of a damper element a link, a connecting strut, a hinged support, a stabiliser or a steering element, a steering rod, a steering column or a toe link of a chassis (400) of the vehicle.

6. Mechanical component (100) according to one of the preceding claims, **characterized in that** the deformation element (104) is embodied in an arcuate shape.

7. Mechanical component (100) according to one of the preceding claims, **characterized in that** the mechanical component (100) has a housing (125) for electromagnetically screening the deformation element (104), wherein the housing (125) is fitted onto a surface of the mechanical component (100) and encloses the deformation (104).

8. Chassis (400) for a vehicle, **characterized in that** the chassis (400) has at least one mechanical component (100) according to one of the preceding claims, which mechanical component (100) is coupled to an axle of the vehicle in order to stabilize the driving behaviour of the vehicle.

9. Method for determining stress load acting on a mechanical component (100) according to one of Claims 1 to 7 for a vehicle, comprising a step of generating (502) an alternating electromagnetic field which is influenced by the shape of the deformation element (104), a step of detecting a change in the alternating electromagnetic field which is brought about by the deformation of the deformation element (104), and a step of outputting (504) an electrical detection signal (123) which represents the change in the alternating electromagnetic field which is brought about by the deformation of the deformation element (104).

## Revendications

1. Composant mécanique (100) destiné à un véhicule, dans lequel le composant mécanique (100) comporte une région de mesure (102) et un élément de déformation (104) mécaniquement couplé à la région de mesure (102), dans lequel une première partie de mise en contact et une deuxième partie de mise en contact de l'élément de déformation (104) sont reliées à une surface de la région de mesure (102) et une partie de liaison de l'élément de déformation (104) s'étendant entre les parties de mise en contact est disposée de manière espacée de la surface, dans lequel la région de mesure (102) subit une déformation lors du fonctionnement du composant mécanique (100) lorsqu'une force de sollicitation agit sur le composant mécanique (100) et l'élément de déformation (104) est formé de manière à subir une déformation en réponse au fait que la déformation de la région de mesure (102) est supérieure à la déformation de la région de mesure (102) et peut être détectée par un capteur de champ magnétique (120, 122), **caractérisé en ce que** l'élément de déformation comprend un matériau électriquement conducteur, magnétique ou magnétisable et **en ce que** le composant mécanique (100) comprend au moins un moyen générateur de champ (120) pour générer un champ électromagnétique alternatif qui est influencé par la forme de l'élément de déformation (104), et au moins un moyen de détection (122) destiné à détecter le champ électromagnétique alternatif, dans lequel le moyen générateur de champ (120) et le moyen de détection (122) sont tous deux espacés de l'élément de déformation (104) et ne sont pas en contact mécanique avec l'élément de déformation (104), dans lequel le moyen de détection (122) est réalisé de manière à délivrer un signal de détection électrique (123) qui représente une modification du champ électromagnétique alternatif représentant la déformation de l'élément de déformation (104), dans lequel la région de mesure (102) comprend une rainure (330) et l'élément de déformation (104) est ajusté dans le rainure (330).

2. Composant mécanique (100) selon la revendication précédente, **caractérisé en ce que** l'élément de déformation (104) est disposé à une position de la région de mesure (102) qui est située le plus loin d'une ligne d'action de force (127) de la force de sollicitation.

3. Composant mécanique (100) selon l'une quelconque des revendications précédentes, **caractérisé en ce que** le composant mécanique (100) comporte une première périphérie (106) et une deuxième périphérie (108), dans lequel la région de mesure (102) est disposée entre les périphéries (106, 108), dans lequel la première périphérie (106) comporte une première interface mécanique (116) pour relier le composant mécanique (100) à un autre composant mécanique (441) et dans lequel la deuxième périphérie (108) comporte une deuxième interface mécanique (118) pour relier le composant mécanique (100) à encore un autre composant mécanique (443).

4. Composant mécanique (100) selon la revendication 3, **caractérisé en ce que** la première périphérie (106), la deuxième périphérie (108) et/ou la région de mesure (102) ne comprennent pas de matériau magnétique ou magnétisable.

5. Composant mécanique (100) selon l'une quelconque des revendications précédentes, **caractérisé en ce que** le composant mécanique (100) est un élément d'amortissement, une tige de piston d'un élément d'amortissement, un organe de direction, une barre de liaison, un support pendulaire, un stabilisateur ou un élément de direction, une bielle de direction, une colonne de direction ou un dispositif de changement de voie d'un train de roulement (400) du véhicule.

6. Composant mécanique (100) selon l'une quelconque des revendications précédentes, **caractérisé en ce que** l'élément de déformation (104) est réalisé de manière à présenter une forme arquée.

7. Composant mécanique (100) selon l'une quelconque des revendications précédentes, **caractérisé en ce que** le composant mécanique (100) comporte un boîtier (125) pour le blindage électromagnétique de l'élément de déformation (104), dans lequel le boîtier (125) est monté sur une surface du composant mécanique (100) et entoure l'élément de déformation (104).

8. Train de roulement (400) destiné à un véhicule, **caractérisé en ce que** le train de roulement (400) comporte au moins un composant mécanique (100) selon l'une quelconque des revendications précédentes qui est couplé à un essieu du véhicule pour stabiliser le comportement routier du véhicule.

9. Procédé pour déterminer une force de sollicitation agissant sur un composant mécanique (100) selon l'une quelconque des revendications 1 à 7 et destinée à un véhicule, comprenant une étape consistant à générer (502) un champ électromagnétique alternatif qui est influencé par la forme de l'élément de déformation (104), une étape consistant à détecter une modification, provoquée par la déformation de l'élément de déformation (104), du champ électromagnétique alternatif et une étape consistant à délivrer (504) un signal de détection électrique (123) qui représente la modification du champ électromagnétique alternatif provoquée par la déformation de l'élément de déformation (104).
